# FASCICULE DE BREVET EUROPEEN

(11) **EP 3 179 582 B1**
(45) Date de publication et mention de la délivrance du brevet: **04.09.2019**
(21) Numéro de dépôt: 16203089.4
(22) Date de dépôt: 09.12.2016
(51) Int. Cl.: H02B 1/36

(54) **TABLEAU ÉLECTRIQUE COMPORTANT UNE INTERFACE DE COMMUNICATION**
SCHALTANLAGE UMFASSEND EINE KOMMUNIKATIONSSCHNITTSTELLE
ELECTRICAL PANEL COMPRISING A COMMUNICATION INTERFACE

(30) Priorité: 11.12.2015 FR 1562204
(43) Date de publication de la demande: 14.06.2017
(73) Titulaire: Schneider Electric Industries SAS, 92500 Rueil-Malmaison (FR)
(72) Inventeur: BARSTZ, Daniel, 38050 Grenoble Cedex 09 (FR); CONTINI, Erick, 38050 Grenoble Cedex 09 (FR)
(74) Mandataire: Lavoix

(56) Documents cités:
- EP-A2- 1 441 580
- WO-A1-2012/080587
- US-A1- 2007 025 240

## Description

L'invention concerne une interface de communication pour un tiroir d'un tableau électrique. L'invention concerne également un tableau électrique comportant une telle interface de communication.

L'invention concerne plus particulièrement les équipements électriques industriels, tels que des tableaux électriques comportant des appareils électriques reliés à une liaison de données à haut débit, par exemple de type Ethernet ou Profibus.

Un tel tableau électrique est connu de WO 2012/080587. Ce tableau électrique comporte des appareils électriques qui sont reliés à une liaison de données, ou bus de données, pour communiquer entre eux et/ou avec des éléments extérieurs du tableau électrique. Les appareils électriques sont logés dans des tiroirs amovibles reçus dans des logements correspondants du tableau électrique, de manière à être connectés au bus de données. Les tiroirs peuvent être retirés hors du logement, pour déconnecter du bus de données l'appareil porté par ce tiroir. Ces tiroirs facilitent la maintenance des appareils. Un opérateur peut intervenir sur l'appareil d'un tiroir retiré du tableau, tandis que les autres appareils du tableau continuent à fonctionner normalement.

Cependant, il est nécessaire d'éviter que le bus de données ne soit rompu lorsque l'un des appareils électriques cesse de fonctionner. En effet, typiquement, le bus de données présente une configuration en chaîne ou en guirlande, également connue sous le terme en langue anglaise « daisy chain », dans laquelle les appareils électriques sont connectées en série les uns derrière les autres.

Pour ce faire, le tableau électrique comporte plusieurs interfaces de communication chacune placée au niveau d'un logement du tableau électrique. Chaque interface de communication comporte un dispositif de commutation qui permet la connexion au bus de données de l'appareil contenu dans le tiroir auquel elle est associée, et qui maintient la continuité du bus de données lorsque le tiroir est retiré du tableau électrique.

Un inconvénient de ce tableau électrique est qu'il nécessite la présence d'une liaison câblée qui s'étend, pour chaque logement, entre un dispositif de commutation de l'interface et un connecteur destiné à s'embrocher sur un connecteur correspondant porté par le tiroir et servant à connecter l'appareil électrique. Cette liaison câblée présente de nombreux inconvénients. Elle doit généralement être installée manuellement lors de l'installation du tableau électrique. Dans le cas où le tableau électrique est complexe, comme c'est souvent le cas en milieu industriel, le nombre de liaisons filaires à câbler peut être important, ce qui engendre un coût d'installation élevé et favorise le risque d'une erreur de câblage préjudiciable au bon fonctionnement du tableau électrique. De plus, en raison de contraintes en termes d'espace et/ou d'encombrement, les liaisons peuvent présenter des longueurs de câble qui sont différentes d'une interface à l'autre. Ces variations de longueurs, également connues sous le nom de longueurs de dérivation, peuvent altérer défavorablement le débit et les performances de transmission de données dans le bus de données.

C'est à ces inconvénients qu'entend plus particulièrement remédier l'invention en proposant une interface de communication pour un tiroir amovible d'un tableau électrique qui permette de maintenir la continuité d'un bus de données du tableau lorsque le tiroir est retiré, cette interface étant facile à installer et n'entraînant pas de réduction des performances de transmission de données dans le bus de données.

A cet effet, l'invention concerne un tableau électrique comportant :
- une pluralité de tiroirs amovibles, chacun comportant un appareil électrique, et permettant de connecter cet appareil électrique au tableau électrique ou de l'en retirer ;
- une pluralité de logements, chacun adapté pour recevoir un tiroir amovible pour connecter l'appareil électrique porté par ce tiroir au tableau électrique,
- une pluralité d'interfaces de communication placées chacune au niveau d'un logement,
- un bus de données, raccordé à chaque interface de communication,
chaque interface de communication comportant un connecteur de données, configuré pour être raccordé à un connecteur de données correspondant de l'appareil électrique du tiroir amovible lorsque ce tiroir est reçu dans le tableau, un dispositif de commutation, sélectivement et réversiblement commutable entre un état connecté, dans lequel il raccorde le bus de données au connecteur de données, et un état déconnecté, dans lequel il isole le bus de données du connecteur de données tout en assurant la continuité du bus de données. L'interface de communication comporte un boîtier au sein duquel sont intégrés le dispositif de commutation et le connecteur de données.

Grâce à l'invention, la liaison câblée peut être supprimée. L'installation et la maintenance du tableau électrique sont ainsi considérablement simplifiées. Le coût d'installation est ainsi réduit, de même que le risque d'une erreur de câblage. De plus, en intégrant l'interface de communication avec le connecteur au sein d'un même boîtier, les paramètres, notamment de longueur, de la connexion entre cette interface de communication et ce connecteur de données peuvent être maîtrisés industriellement et sont ainsi connus lors de l'installation du tableau électrique. Il n'y a donc plus besoin de tenir compte, lors de l'installation du tableau électrique, d'une éventuelle fluctuation de longueurs de dérivation d'une interface de communication à l'autre, ce qui améliore le fonctionnement du bus de données.

Selon des aspects avantageux mais non obligatoires de l'invention, un tel tableau électrique peut comporter une ou plusieurs des caractéristiques suivantes, prises dans toute combinaison techniquement admissible.
- L'interface de communication comporte une barrière de masse intégrée au sein du boîtier pour protéger mutuellement le connecteur de données et le dispositif de commutation contre des perturbations électromagnétiques.
- L'interface comporte un circuit imprimé dont des pistes électriquement conductrices raccordent le connecteur de données au dispositif de commutation, ces pistes étant raccordées au bus de données uniquement lorsque le dispositif de commutation est dans l'état connecté.
- Le bus de données est de type Ethernet.
- Le bus de données est de type Profibus.
- Le boîtier est configuré pour être monté fixement dans le tableau électrique sans degré de liberté.
- Le dispositif de commutation comporte un module de détection de la position du tiroir amovible dans le tableau électrique, ce module de détection étant configuré pour commuter automatiquement le dispositif de commutation de l'état connecté vers l'état déconnecté lorsqu'il détecte que le tiroir amovible est retiré du tableau électrique.
- L'interface comporte un connecteur de puissance configuré pour être raccordé à un bus de puissance du tableau électrique et pour être raccordée à un connecteur de puissance correspondant de l'appareil électrique de façon à alimenter cet appareil électrique lorsque le tiroir amovible auquel il est associé est inséré dans le tableau électrique, alors que le module de détection comporte un capteur d'une grandeur électrique représentative de la puissance consommée par l'appareil transitant par le bus de puissance raccordé au connecteur de puissance, et est configuré pour commuter le dispositif de commutation lorsqu'il détecte que l'appareil électrique n'est plus alimenté électriquement par le connecteur de puissance.
- Le module de détection comporte un interrupteur, conformé pour venir au contact du tiroir amovible lorsque ce tiroir est inséré à l'intérieur du tableau électrique et pour basculer d'une première position vers une deuxième position lorsque ce tiroir est retiré du tableau électrique.

L'invention sera mieux comprise et d'autres avantages de celle-ci apparaîtront plus clairement à la lumière de la description qui va suivre, d'un mode de réalisation d'une interface de communication pour un tiroir amovible d'un tableau électrique donnée uniquement à titre d'exemple et faite en référence aux dessins annexés dans lesquels :
- la figure 1 est une représentation schématique d'un tableau électrique selon l'état de la technique pour des appareils électriques;
- la figure 2 est une représentation schématique d'un logement du tableau électrique de la figure 1, prévu pour recevoir un tiroir amovible comprenant un appareil électrique ;
- la figure 3 est une représentation schématique d'un tableau électrique selon l'invention pour des appareils électriques ;
- la figure 4 est une représentation schématique d'un logement du tableau électrique de la figure 3, selon une vue analogue à celle de la figure 2, prévu pour recevoir un tiroir amovible comportant un appareil électrique ;
- la figure 5 est une représentation schématique d'un boîtier du logement de la figure 3, ce boîtier comportant une interface de communication selon l'invention ;
- la figure 6 est une représentation schématique d'une barrière de masse dans le boîtier de la figure 5.

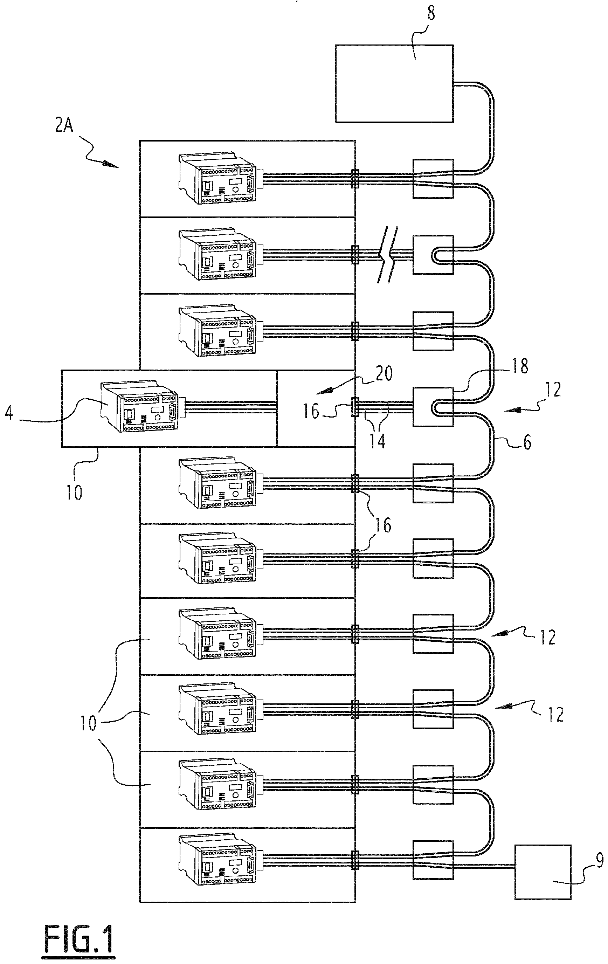

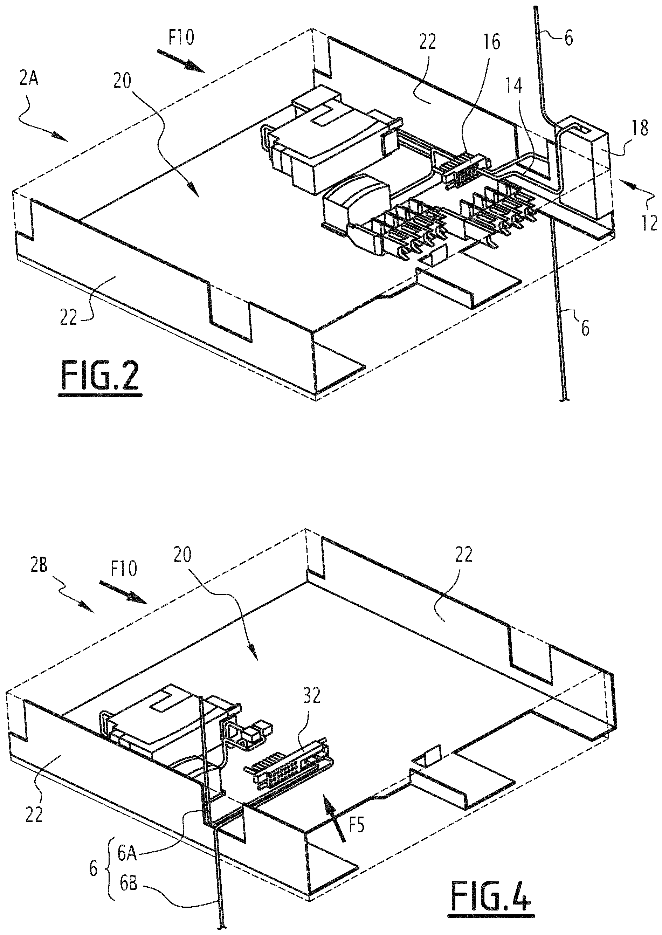

Les figures 1 et 2 illustrent un tableau électrique 2A selon l'état de la technique qui comporte des appareils électriques 4. Chaque appareil 4 est pourvu d'une interface de communication pour échanger des données. A titre d'exemple non limitatif, les appareils 4 sont des disjoncteurs, des contacteurs, des variateurs de vitesse pour moteur électriques ou pour n'importe quel type d'appareillage ou relayage électrique.

Les appareils 4 sont ainsi adaptés pour être reliés à une liaison, ou bus, de données 6 du tableau 2A, pour communiquer entre eux et/ou avec des éléments extérieurs 8, 9 du tableau électrique 2. En variante, les éléments 8 et 9 sont omis et le bus 6 est connecté de façon à former une boucle fermée.

Les appareils électriques 4 sont logés dans des tiroirs amovibles 10 qui sont configurés pour être reçus dans des logements 20 correspondants du tableau 2A. A la figure 1, un tiroir est représenté partiellement inséré dans son logement 20 qui est ainsi visible. Les autres logements 20 sont remplis par les autres tiroirs 10.

Le bus 6 est une liaison de données à haut débit, par exemple présentant un débit de transmission de données supérieur ou égal à 5Mbits/s, ou à 10Mbits/s. Dans cet exemple, le bus 6 est un bus de terrain de type Ethernet. En variante, il peut s'agir d'un bus de terrain de type Profibus, par exemple tel que défini par la norme IEC 61158 de la Commission Electrotechnique Internationale.

Chaque tiroir amovible 10 est déplaçable entre une position enclenchée et une position retirée. Dans la position enclenchée, le tiroir 10 est reçu à l'intérieur d'un logement 20. L'appareil 4 porté par ce tiroir 10 est alors connecté au bus de données 6. Dans la position retirée, le tiroir 10 est au moins en partie retiré hors du logement 20. L'appareil 4 porté par ce tiroir 10 est alors déconnecté du bus de données 6. Par exemple, le déplacement du tiroir 10 est réalisé par coulissement au moyen de rails de guidage.

La figure 2 représente schématiquement un logement 20 du tableau 2A. Ce logement 20 est apte à recevoir un tiroir 10 pour le connecter au tableau 2A par insertion le long de la direction illustrée par la flèche F10. Par exemple, le logement 20 présente une forme complémentaire à celle du tiroir 10. Le logement 20 est ici délimité par des parois 22 d'un châssis du tableau 2A et présente une forme de pavé rectangulaire. Pour simplifier la description, seul un exemplaire du logement 20 du tableau 2A est décrit. Dans cet exemple, les logements 20 sont identiques les uns aux autres. En variante, les logements 20 peuvent être différents les uns des autres, notamment de par leurs dimensions, qui sont adaptées à celles des tiroirs 10.

Le tableau 2A comporte également une pluralité d'interfaces de communication 12. Les interfaces 12 sont chacune placées au niveau d'un logement 20. Chaque interface 12 est connectée au bus 6 pour permettre la connexion au bus de données 6 de l'appareil 4 contenu dans le tiroir 10 reçu dans ce logement 20.

Le bus de données 6 présente une configuration en chaîne ou en guirlande, également connue sous le terme en langue anglaise de « daisy chain ». Ainsi, les interfaces 12 du tableau 2A sont connectées au bus 6 en série les unes derrière les autres.

L'interface 12 est en outre configurée pour maintenir la continuité du bus de données 6 lorsque le tiroir 10 associé à cette interface 12 est dans sa position retirée. L'interface 12 permet d'éviter que le bus de données 6 ne soit rompu lorsque l'un des appareils électriques 4 cesse de fonctionner. L'interface de communication 12 comporte pour cela un dispositif de commutation 18 qui est distinct d'un connecteur 16 et qui est relié à ce connecteur 16 au moyen d'une liaison câblée 14. La liaison 14 est généralement un câble électrique.

Ce tableau 2A connu a pour inconvénient que la liaison câblée 14 doit être installée manuellement lors de l'installation du tableau 2A. De plus, les différentes liaisons câblées 14 du tableau 2A peuvent présenter des longueurs de câble qui sont différentes, engendrant des variations de longueurs qui altèrent le fonctionnement du bus de données.

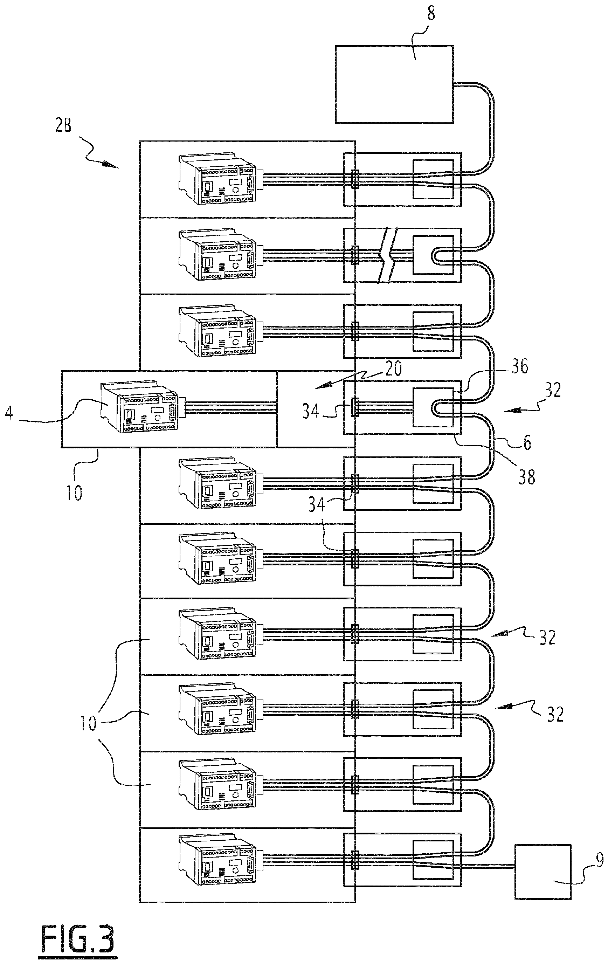

Les figures 3 et 4 illustrent un tiroir électrique 2B selon l'invention et qui remédie à ces inconvénients.

Le tableau 2B est comparable au tableau 2A à la différence près que le tableau 2B comporte une interface de communication 32, à la place de l'interface 12, et un connecteur de données 34, à la place du connecteur 16.

L'interface de communication 32 comporte un connecteur de données 34, un dispositif de commutation 36 et un boîtier 38. Le dispositif 36 et le connecteur 34 sont intégrés à l'intérieur du boîtier 38. Le boîtier 38 est par exemple en matière plastique ou métallique. Ce boîtier 38 présente ici une forme de prisme à base rectangulaire de dimensions 4 cm x 5cm ou 5 cm x 10 cm.

En intégrant ainsi le dispositif 36 et le connecteur 34 dans le boîtier 38, la liaison câblée 14 peut être supprimée, ce qui simplifie l'installation et la maintenance du tableau électrique 2B. On réduit ainsi le coût d'installation et le risque d'une erreur de câblage. De plus, en intégrant l'interface 32 avec le connecteur 34 au sein d'un même boîtier, les paramètres, notamment de longueur, de la liaison de données entre cette interface de communication et ce connecteur de données peuvent être maîtrisés industriellement et sont ainsi connus lors de l'installation du tableau électrique. Il n'y a donc plus besoin de tenir compte, lors de l'installation du tableau électrique, d'une éventuelle fluctuation de longueurs de dérivation d'une interface de communication à l'autre, ce qui améliore le fonctionnement du bus de données.

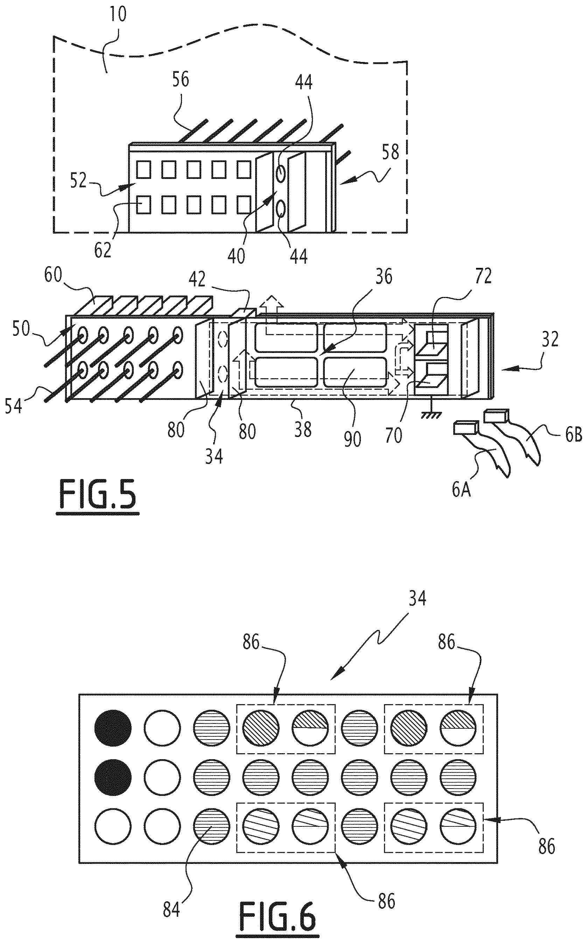

La figure 5 représente cette interface 32 selon une vue rapprochée, selon la flèche F5 de la figure 4.

Le connecteur 34 est configuré pour être raccordé à un connecteur de données correspondant 40 relié à l'appareil électrique 4. Ce connecteur 40 est par exemple fixé solidairement sans degré de liberté au tiroir 10. Le connecteur 34 comporte ici des broches 42 configurées pour être reçues dans des réceptacles complémentaires 44 du capteur 40, de manière à assurer une transmission de données entre les deux connecteurs 34 et 40 lorsqu'ils sont connectés ensemble. En variante, les connecteurs 34 et 40 présentent des formes différentes tout en restant complémentaires. Par exemple, les broches 42 sont portées par le connecteur 40.

Dans cet exemple, l'interface 32 comporte un circuit intégré muni de pistes électriquement conductrices qui raccordent électriquement le connecteur 34 au dispositif 36.

De cette manière, les caractéristiques, notamment de longueur, de la liaison entre le connecteur 34 et le dispositif 36 peuvent être contrôlées industriellement lors de la fabrication de l'interface 32. Les interfaces 32 d'un même tableau électrique 2B peuvent donc être réalisées de façon identique, ce qui réduit les variations de longueur de dérivation au sein d'un même tableau 2B. Les performances du bus de données 6 en sont ainsi améliorées.

Avantageusement, l'interface 32 comporte des barrières de masse 80 qui permettent d'isoler le connecteur 34 du dispositif 36 contre des perturbations électromagnétiques lors du fonctionnement de l'interface 32, par exemple au moyen de plaques reliées à une masse électrique.

Avantageusement, le connecteur 34 comporte en outre des barrières de masse 84, comme illustré à la figure 6. Les branches 6A et 6B du bus de communication 6 sont formées d'une pluralité de fils de communication séparés, pour la transmission et la réception de données. A chaque fil de communication correspond une broche 42 du connecteur 34. Dans cet exemple, ces fils de communications sont reliés à des broches 42, dites broches actives 86. Ici, les broches actives 86 sont groupées par paires selon la fonction des fils de communication associés. Ces paires de broches actives 86 sont séparées les unes des autres par des broches 42 qui ne sont pas associées aux fils de communication et qui sont raccordées à la masse électrique pour former la barrière de masse 84.

Dans cet exemple, l'interface 32 comporte avantageusement un connecteur de puissance 50 (figure 5) configuré pour être raccordé à un connecteur de puissance complémentaire 52 associé à l'appareil électrique 4. Le connecteur 50 est raccordé à un bus de puissance du tableau électrique 2B au moyen de câbles électriques 54. Pour simplifier la figure 6, seul un câble porte la référence 54. Le connecteur 52 est raccordé à l'appareil 4 au moyen de câble électrique 56 pour alimenter électriquement l'appareil 4. Le connecteur 52 est fixé sans degré de liberté au tiroir 10. Ici, les connecteurs 52 et 40 sont associés au sein d'un même boîtier 58 solidaires sans degré de liberté du tiroir 10. Le connecteur 50 comporte des broches de contact 60 configurées pour être reçues dans des orifices 62 de forme complémentaire et portées par le connecteur 52 de manière à assurer, lorsqu'ils sont insérés l'un dans l'autre, le passage d'un courant électrique depuis le bus de puissance du tableau électrique 2B vers l'appareil 4. En variante, le connecteur 50 peut être omis. Dans ce cas, l'appareil 4 se connecte au bus de puissance par un connecteur dédié distinct de l'interface 32.

L'interface 32 comporte également des connecteurs d'entrée et de sortie 70, 72 du bus de données 6. Plus précisément, le bus de données 6 comporte une branche d'entrée 6A et une branche de sortie 6B qui sont respectivement connectées au connecteur 70 et 72. Ces connecteurs 70 et 72 permettent de connecter l'interface 32 au bus 6. Le dispositif 36 est raccordé aux connecteurs 70, 72 au moyen d'une liaison de données. Pour simplifier la figure 5, les branches 6A et 6B du bus 6 sont illustrées déconnectées hors des connecteurs 70 et 72.

Par exemple, les connecteurs 70, 72 sont choisis en fonction du type de technologie du bus de données 6. Les connecteurs 70, 72 sont ici des connecteurs de type RJ45. En variante, si le bus 6 est un bus de terrain de type Profibus, les connecteurs 70, 72 peuvent être des connecteurs de type D9 à neuf broches ou bien un connecteur de type M12 à cinq broches.

Le dispositif 36 est commutable, sélectivement et réversiblement, entre un état connecté, dans lequel il raccorde le bus de données 6 au connecteur 34, et un état déconnecté, dans lequel il isole le bus de données 6 du connecteur 34, tout en assurant la continuité du bus de données 6. Dans l'état connecté, des données peuvent transiter entre le bus 6 et l'appareil 4. La continuité du bus 6 est assurée par l'intermédiaire de chaque appareil 4 connecté à ce bus. Dans l'état déconnecté, des données ne peuvent plus transiter entre le bus 6 et l'appareil 4, mais peuvent toujours transiter le long du bus de données 6 notamment entre les branches 6A et 6B de ce bus de données 6. Par « continuité du bus de données », on entend que des données peuvent être transmises de n'importe quel point du bus 6 vers n'importe quel autre point du bus 6.

Le dispositif 36 est par exemple alimenté électriquement par le bus de puissance du tableau 2B.

Dans cet exemple, le dispositif de commutation 36 comporte des relais électromécaniques, non représentés sur cette figure 5, interposés entre les fils de communication formant les branches 6A et 6B du bus de communication 6 et le connecteur 34. Dans l'état connecté, les relais mettent en communication les fils des branches 6A et 6B au connecteur 34. Dans l'état déconnecté, les relais raccordent les fils de la branche 6A aux fils correspondants de la branche 6B, et les isolent du connecteur 34. Ces relais sont par exemple actionnés entre leurs positions correspondantes par une bobine électromagnétique, en générant un champ magnétique lorsqu'elle est alimentée par une source d'énergie. Un tel dispositif de commutation 36 est décrit plus en détail dans le document WO-A-2012/080587.

Le dispositif 36 comporte avantageusement un module de détection 90 de la position du tiroir 10 dans le logement 20. Le module 90 est configuré pour déclencher automatiquement la commutation du dispositif 36 depuis son état connecté vers son état déconnecté lorsque le module 90 détecte que le tiroir 10 est retiré du tableau 2A. Par exemple, ce module 90 envoie un signal de commande pour alimenter la bobine électromagnétique du relais électromécanique du dispositif 36.

Selon un premier exemple, le module 90 comporte un interrupteur qui est conformé pour basculer entre une des première et deuxième positions en fonction de la position du tiroir 10 dans le logement 20. Par exemple, l'interrupteur est placé au fond du logement 20 de sorte à être poussé de sa première position vers sa deuxième position lorsque le tiroir 10 est dans la position insérée et à revenir vers sa première position lorsque le tiroir 10 est retiré du logement 20. Cet interrupteur est par exemple un contacteur ou un bouton-poussoir. Le fond du logement désigne ici une face verticale du logement qui est située à l'opposé d'une façade du tableau 20. En variante, l'interrupteur peut être placé sur une paroi latérale du logement 20. Dans ce cas, l'interrupteur est un interrupteur de type à contact glissant.

Dans un deuxième exemple, le module 90 est configuré pour mesurer la puissance électrique qui est consommée par l'appareil 4 par l'intermédiaire des connecteurs d'alimentation 50. De cette façon, lorsque le tiroir est retiré du logement 20, la connexion de puissance entre les connecteurs 50 et 52 est interrompue. Le module 90 détecte alors que l'appareil 4 n'est plus alimenté. Le module 90 déclenche alors la commutation du dispositif 36 vers son état déconnecté. Par exemple, le module 90 comporte un capteur d'une grandeur électrique représentative de la puissance consommée par l'appareil 4 transitant par le bus de puissance raccordé au connecteur de puissance 50. Le module 90 est programmé pour mesurer régulièrement cette grandeur représentative et pour la comparer à une valeur seuil prédéfinie. Lorsque la valeur mesurée de la grandeur représentative devient brusquement inférieure à la valeur seuil prédéfinie, le tiroir 10 est considéré comme étant retiré.

Dans un troisième exemple, le module 90 est omis. Par exemple, l'interface 36 est configurée pour être alimenté électriquement uniquement par l'intermédiaire d'un circuit d'alimentation porté par le tiroir 10. Par exemple, ce circuit d'alimentation comporte un câblage électrique fixé au tiroir 10. Lorsque le tiroir 10 est dans sa position enclenchée, le circuit d'alimentation raccorde le bus de puissance au dispositif 36, par exemple au moyen des connecteurs 50, 52 de puissance et d'un connecteur de puissance supplémentaire directement raccordé au dispositif 36. Dans cet exemple, le dispositif 36 n'est pas alimenté électriquement directement par l'intermédiaire du connecteur 50 ou des câbles 54. Lorsque le tiroir 10 est dans sa position retirée, le circuit d'alimentation n'est plus connecté au bus de puissance ni au dispositif 36. Le dispositif 36 cesse donc d'être alimenté. Le dispositif 36 est configuré pour commuter automatiquement vers son état déconnecté lorsqu'il cesse d'être alimenté électriquement. Ainsi, la détection du retrait du tiroir 10 se fait par la perte d'alimentation électrique du dispositif 36. Lorsque le tiroir 10 repasse dans la position enclenchée, le circuit d'alimentation permet à nouveau d'alimenter électriquement le dispositif 36.

Les différents modes de réalisation de l'invention peuvent être combinés entre eux selon toute combinaison techniquement admissible de manière à générer de nouveaux modes de réalisation de l'invention, comme défini par les revendications.

## Revendications

1. Tableau électrique (2B) comportant :
- une pluralité de tiroirs amovibles (10), chacun comportant un appareil électrique (4) et permettant de connecter cet appareil électrique au tableau électrique ou de l'en retirer,
- une pluralité de logements (20), chacun adapté pour recevoir un tiroir amovible (10) pour connecter l'appareil électrique (4) porté par ce tiroir au tableau électrique,
- une pluralité d'interfaces de communication (32) placée chacune au niveau d'un logement (20) ;
- un bus de données (6), raccordé à chaque interface de communication (32),
chaque interface de communication comportant :
- un connecteur de données (34), configuré pour être raccordé à un connecteur de données correspondant (40) de l'appareil électrique du tiroir amovible lorsque ce tiroir amovible est reçu dans le tableau,
- un dispositif de commutation (36), sélectivement et réversiblement commutable entre :
• un état connecté, dans lequel il raccorde le bus de données (6) au connecteur de données (34), et
• un état déconnecté, dans lequel il isole le bus de données (6) du connecteur de données (34) tout en assurant la continuité du bus de données,
le tableau électrique (2B) étant **caractérisé en ce que** l'interface de communication comporte un boîtier (38) au sein duquel sont intégrés le dispositif de commutation (36) et le connecteur de données (34).

2. Tableau électrique (2B) selon la revendication 1, **caractérisé en ce que** l'interface de communication (32) comporte une barrière de masse (80) intégrée au sein du boîtier (38) pour protéger mutuellement le connecteur de données (34) et le dispositif de commutation (36) contre des perturbations électromagnétiques.

3. Tableau électrique (2B) selon la revendication 1 ou 2, **caractérisé en ce qu'**il comporte un circuit imprimé dont des pistes électriquement conductrices raccordent le connecteur de données (34) au dispositif de commutation (36), ces pistes étant raccordées au bus de données (6) uniquement lorsque le dispositif de commutation est dans l'état connecté.

4. Tableau électrique (2B) selon l'une quelconque des revendications 1 à 3, **caractérisé en ce que** le boîtier (38) est configuré pour être monté fixement dans le tableau électrique (2B) sans degré de liberté.

5. Tableau électrique (2B) selon l'une quelconque des revendications 1 à 4, **caractérisé en ce que** le dispositif de commutation (36) comporte un module de détection (90) de la position du tiroir amovible dans le tableau électrique, ce module de détection étant configuré pour commuter automatiquement le dispositif de commutation (36) de l'état connecté vers l'état déconnecté lorsqu'il détecte que le tiroir amovible (10) est retiré du tableau électrique (2B).

6. Tableau électrique (2B) selon la revendication 5, **caractérisé en ce que** le module de détection (90) comporte un interrupteur, conformé pour venir au contact du tiroir amovible (10) lorsque ce tiroir est inséré à l'intérieur du tableau électrique (2B) et pour basculer d'une première position vers une deuxième position lorsque ce tiroir est retiré du tableau électrique.

7. Tableau électrique (2B) selon la revendication 5, **caractérisé en ce qu'**il comporte un connecteur de puissance (50) configuré pour être raccordé à un bus de puissance du tableau électrique et pour être raccordée à un connecteur de puissance correspondant (52) de l'appareil électrique (4) de façon à alimenter cet appareil électrique lorsque le tiroir amovible (10) auquel il est associé est inséré dans le tableau électrique (2B), et **en ce que** le module de détection (90) comporte un capteur d'une grandeur électrique représentative de la puissance consommée par l'appareil (4) transitant par le bus de puissance raccordé au connecteur de puissance (50), et est configuré pour commuter le dispositif de commutation lorsqu'il détecte que l'appareil électrique (4) n'est plus alimenté électriquement par le connecteur de puissance.

8. Tableau électrique selon la revendication 7, **caractérisé en ce que** le bus de données (6) est de type Ethernet.

9. Tableau électrique selon la revendication 7, **caractérisé en ce que** le bus de données (6) est de type Profibus.

## Patentansprüche

1. Elektrischer Verteiler (2B), umfassend:
- eine Vielzahl von herausnehmbaren Schubfächern (10), die jeweils eine elektrische Einrichtung (4) umfassen und es ermöglichen, diese elektrische Einrichtung mit dem elektrischen Verteiler zu verbinden oder sie daraus herauszuziehen,
- eine Vielzahl von Aufnahmen (20), wobei jede dafür eingerichtet ist, ein herausnehmbares Schubfach (10) aufzunehmen, um die von diesem Schubfach getragene elektrische Einrichtung (4) mit dem elektrischen Verteiler zu verbinden,
- eine Vielzahl von Kommunikationsschnittstellen (32), wobei jede im Bereich einer Aufnahme (20) angeordnet ist;
- einen Datenbus (6), der an jede Kommunikationsschnittstelle (32) angeschlossen ist,
wobei jede Kommunikationsschnittstelle Folgendes umfasst:
- einen Datenverbinder (34), der dafür ausgelegt ist, an einen entsprechenden Datenverbinder (40) der elektrischen Einrichtung des herausnehmbaren Schubfachs angeschlossen zu werden, wenn dieses herausnehmbare Schubfach in dem Verteiler aufgenommen wird,
- eine Schaltvorrichtung (36), die selektiv und reversibel zwischen Folgendem schaltbar ist:
• einem verbundenen Zustand, in dem sie den Datenbus (6) an den Datenverbinder (34) anschließt, und
• einem getrennten Zustand, in dem sie den Datenbus (6) von dem Datenverbinder (34) isoliert und gleichzeitig die Kontinuität des Datenbusses sicherstellt,
wobei der elektrische Verteiler (2B) **dadurch gekennzeichnet ist, dass** die Kommunikationsschnittstelle ein Gehäuse (38) umfasst, in das die Schaltvorrichtung (36) und der Datenverbinder (34) integriert sind.

2. Elektrischer Verteiler (2B) nach Anspruch 1, **dadurch gekennzeichnet, dass** die Kommunikationsschnittstelle (32) eine in das Gehäuse (38) integrierte Massebarriere (80) umfasst, um den Datenverbinder (34) und die Schaltvorrichtung (36) wechselseitig vor elektromagnetischen Störungen zu schützen.

3. Elektrischer Verteiler (2B) nach Anspruch 1 oder 2, **dadurch gekennzeichnet, dass** er eine gedruckte Schaltung umfasst, deren elektrisch leitende Bahnen den Datenverbinder (34) an die Schaltvorrichtung (36) anschließen, wobei diese Bahnen nur dann an den Datenbus (6) angeschlossen sind, wenn die Schaltvorrichtung im verbundenen Zustand ist.

4. Elektrischer Verteiler (2B) nach einem der Ansprüche 1 bis 3, **dadurch gekennzeichnet, dass** das Gehäuse (38) dafür ausgelegt ist, ohne Freiheitsgrad fix in dem elektrischen Verteiler (2B) montiert zu werden.

5. Elektrischer Verteiler (2B) nach einem der Ansprüche 1 bis 4, **dadurch gekennzeichnet, dass** die Schaltvorrichtung (36) ein Modul zur Detektion (90) der Position des herausnehmbaren Schubfachs in dem elektrischen Verteiler umfasst, wobei dieses Detektionsmodul dafür ausgelegt ist, die Schaltvorrichtung (36) automatisch vom verbundenen Zustand in den getrennten Zustand zu schalten, wenn es detektiert, dass das herausnehmbare Schubfach (10) aus dem elektrischen Verteiler (2B) herausgezogen wurde.

6. Elektrischer Verteiler (2B) nach Anspruch 5, **dadurch gekennzeichnet, dass** das Detektionsmodul (90) einen Unterbrecher umfasst, der dafür ausgebildet ist, in Kontakt mit dem herausnehmbaren Schubfach (10) zu gelangen, wenn dieses Schubfach in das Innere des elektrischen Verteilers (2B) eingefügt wird, und von einer ersten Position in eine zweite Position zu kippen, wenn dieses Schubfach aus dem elektrischen Verteiler herausgezogen wird.

7. Elektrischer Verteiler (2B) nach Anspruch 5, **dadurch gekennzeichnet, dass** er einen Leistungsverbinder (50) umfasst, der dafür ausgelegt ist, an einen Leistungsbus des elektrischen Verteilers angeschlossen zu werden und an einen entsprechenden Leistungsverbinder (52) der elektrischen Einrichtung (4) angeschlossen zu werden, um diese elektrische Einrichtung zu versorgen, wenn das herausnehmbare Schubfach (10), dem er zugeordnet ist, in den elektrischen Verteiler (2B) eingefügt ist, und dass das Detektionsmodul (90) einen Messfühler für eine elektrische Größe umfasst, die repräsentativ für die von der Einrichtung (4) verbrauchte Leistung ist, die durch den Leistungsbus befördert wird, der an den Leistungsverbinder (50) angeschlossen ist, und dafür ausgelegt ist, die Schaltvorrichtung zu schalten, wenn es detektiert, dass die elektrische Einrichtung (4) nicht mehr durch den Leistungsverbinder elektrisch versorgt wird.

8. Elektrischer Verteiler nach Anspruch 7, **dadurch gekennzeichnet, dass** der Datenbus (6) vom Typ Ethernet ist.

9. Elektrischer Verteiler nach Anspruch 7, **dadurch gekennzeichnet, dass** der Datenbus (6) vom Typ Profibus ist.

## Claims

1. Electrical panel (2B) comprising:
- a plurality of removable trays (10), each having an electrical device (4) and allowing the electrical device to be connected to the electrical panel or to be withdrawn therefrom,
- a plurality of receivers (20), each adapted to receive a removable tray (10) in order to connect the electrical device (4) carried by that tray to the electrical panel,
- a plurality of communication interfaces (32) each situated in the region of a receiver (20),
- a data bus (6) connected to each communication interface (32), each communication interface having:
- a data connector (34) which is configured to be connected to a corresponding data connector (40) of the electrical device of the removable tray when the removable tray is received in the panel,
- a switching device (36) which is selectively and reversibly switchable between:
• a connected state, in which it connects the data bus (6) to the data connector (34), and
• a disconnected state, in which it isolates the data bus (6) from the data connector (34) while ensuring the continuity of the data bus,
the electrical panel (2B) being **characterised in that** the communication interface comprises a housing (38) in which the switching device (36) and the data connector (34) are integrated.

2. Electrical panel (2B) according to claim 1, **characterised in that** the communication interface (32) comprises a mass barrier (80) integrated in the housing (38) in order to mutually protect the data connector (34) and the switching device (36) against electromagnetic disturbances.

3. Electrical panel (2B) according to claim 1 or 2, **characterised in that** it comprises a printed circuit, the electrically conductive tracks of which connect the data connector (34) to the switching device (36), the tracks being connected to the data bus (6) only when the switching device is in the connected state.

4. Electrical panel (2B) according to any one of claims 1 to 3, **characterised in that** the housing (38) is configured to be fixedly mounted in the electrical panel (2B) without any degree of freedom.

5. Electrical panel (2B) according to any one of claims 1 to 4, **characterised in that** the switching device (36) comprises a detection module (90) for detecting the position of the removable tray in the electrical panel, the detection module being configured to automatically switch the switching device (36) from the connected state to the disconnected state when it detects that the removable tray (10) has been withdrawn from the electrical panel (2B).

6. Electrical panel (2B) according to claim 5, **characterised in that** the detection module (90) comprises an interrupter which is configured to come into contact with the removable tray (10) when the tray is inserted inside the electrical panel (2B) and to change from a first position into a second position when the tray is withdrawn from the electrical panel.

7. Electrical panel (2B) according to claim 5, **characterised in that** it comprises a power connector (50) which is configured to be connected to a power bus of the electrical panel and to be connected to a corresponding power connector (52) of the electrical device (4) so as to supply power to the electrical device when the removable tray (10) with which it is associated is inserted into the electrical panel (2B), and **in that** the detection module (90) comprises a sensor for an electrical quantity representing the power consumed by the device (4) passing through the power bus connected to the power connector (50), and is configured to switch the switching device when it detects that the electrical device (4) is no longer supplied with power by the power connector.

8. Electrical panel according to claim 7, **characterised in that** the data bus (6) is of the Ethernet type.

9. Electrical panel according to claim 7, **characterised in that** the data bus (6) is of the Profibus type.
